# EUROPEAN PATENT APPLICATION

(11) **EP 0 654 385 A2**
(43) Date of publication of application: **24.05.1995**
(21) Application number: 94308517.5
(22) Date of filing: 17.11.1994
(51) Int. Cl.: B60S 9/12, B62D 53/06

(54) **Landing legs for trailers**

(30) Priority: 18.11.1993 ZA 938610
(71) Applicant: TRANSNET LIMITED, Cape Town Harbour, Western Cape (ZA)
(72) Inventor: Theron, Jacobus Wynand c/o Portnet Limited, Cape Town Harbour Cape Town, West. Cape (ZA)
(74) Representative: Houghton, David

(57) **Abstract**

A landing leg operating system for a trailer landing leg (10) having an upper part (12) fixed to the trailer and a lower part (14) which is displaced vertically to increase or decrease the length of the leg (10) includes a reversible air motor (62). Air is caused to flow through the motor (62) one way to raise the leg (10) and the other way to lower the leg (10). Quick release valves (68,70) are connected to the motor (62) on opposite sides thereof. Air can flow through either valve (68,70) to the motor (62) but air reaching either valve (68,70) from the motor (62) is dumped to atmosphere. Air for raising the leg (10) is taken from the trailer's emergency brake line (120) as the trailer is coupled to a tractor. Air for lowering the leg (10) is taken either manually or automatically from the emergency air brake reservoir (124) to which said emergency brake line (120) is connected as the trailer is uncoupled from the tractor.

## Description

### FIELD OF INVENTION

This invention relates to landing legs for trailers.

### BACKGROUND TO INVENTION

Tractor-trailer combination are extensively used, the connection between the tractor and the trailer being a so-called fifth wheel and king pin. When a tractor is to be uncoupled from a trailer, telescopic landing legs on the trailer are extended to within a short distance of the surface on which the tractor-trailer combination is standing. The electrical coupling, the main brake line and the emergency brake line of the trailer are then disconnected from the corresponding lines of the tractor. As the fifth wheel moves out from under the king pin, the trailer drops onto its landing legs. To reconnect the trailer and the tractor, the tractor is backed up so that the fifth wheel and the king pin engage lifting the trailer off its landing legs which can then be raised. The electrical and brake connections are then made.

All the commercially available landing legs of which Applicants are aware are manually operated. The driver uses a crank handle to turn the input gear of a gear box which drives the movable elements of the landing legs up or down depending on the direction in which the handle is turned.

Many proposals for driven landing legs have been made and reference can be had, by way of example, to United States Specification 4,097,840 which discloses a system including an electric drive motor, to US 5,299,829 which discloses a pneumatic system and to US 3,341,179 which discloses a hydraulically powered system. All these systems include operating means such as a valve or push button which must be activated by the driver to raise and lower the legs.

Applicant is not aware of any commercially available system which does not utilise telescopic landing legs. However, in US 3,874,696 there is disclosed a system in which each landing leg is pivotally mounted at its upper end onto the truck body. An inclined air cylinder mounted between the leg and the truck body swings the leg between a vertical position of use and a retracted position in which it is at about 45 degrees to the horizontal. The trailer includes a storage tank for compressed air and a valve which connects the tank to the lower end of the cylinder to displace the leg to its retracted position and to the upper end of the cylinder to displace the leg to its vertical position. The valve is itself displaced between its two positions by air pressure in, or lack of air pressure in, the emergency brake line. When the trailer is uncoupled, the pressure in the emergency brake line drops and the valve moves to the position in which air is fed to the upper end of the cylinder to lower the leg. When the trailer is reconnected, air pressure in the emergency brake line displaces the valve to its other position whereupon air is fed from the tank to the lower end of the cylinder and the leg is retracted.

### BRIEF SUMMARY OF THE INVENTION

According to one aspect of the present invention there is provided a landing leg for a trailer, a lower part which can move with respect to the upper part thereby to increase or decrease the length of the leg, an air motor, the air motor having first and second ports for connecting the air motor into an air line so that air flowing through said airline in either direction flows through said motor, air quick-release valves connected into said airline one on each side of the air motor, each of said valves having first and second inlet/outlet ports and a dump port through which air flows to atmosphere, and the valves each being connected to permit flow therethrough to the air motor whilst dumping to atmosphere air which flows thereto from the motor, and drive transmission means for transmitting drive from said motor to said lower part thereby to displace said lower part up or down with respect to said upper part and decrease or increase the length of the leg.

In a preferred form said leg includes a valve having an operating element positioned to be engaged by said lower part as it lifts, said valve, when operated by the raised lower part, diverting air away from said air motor so that lifting of said lower part is terminated.

The transmission means can be a step down transmission whereby rotation of an output shaft of the air motor results in slower rotation of an output shaft of said means. In this form there is preferably a smaller chain wheel driven by said output shaft of the air motor and a larger chain wheel driven by a chain entrained around said wheels, and further includes a gear train driven by said larger chain wheel.

The present invention also provides a trailer including an emergency brake line connect to an emergency brake operating air reservoir which fills when the trailer is coupled to a tractor and empties when the trailer is uncoupled from the tractor, a hose coupling for connecting said emergency brake line to the air system of a tractor, and an air leg as described in any one of the three preceding paragraphs having said upper part thereof mounted on said trailer, said air line being connected at one end thereof to said emergency brake line and at the other end thereof to said reservoir to receive air therefrom.

According to a further aspect of the present invention there is provided a trailer which has a landing leg, the leg having an upper part mounted on the trailer, a lower part which can move with respect to the upper part thereby to increase or decrease the length of the leg, an air motor, the air motor having first and second ports for connecting the air motor into an air line so that air flowing through said airline in either direction flows through said motor, air quick-release valves connected into said airline one on each side of the air motor, each of said valves having first and second inlet/outlet ports and a dump port through which air flows to atmosphere, the valves each being connected to permit flow therethrough to the air motor whilst dumping to atmosphere air which flows thereto from the motor, drive transmission means for transmitting drive from said motor to said lower part thereby to displace said lower part up or down with respect to said upper part and decrease or increase the length of the leg, an emergency brake line leading to an emergency brake operating air reservoir, a hose coupling for connecting the emergency brake line to the air system of a tractor, a relay valve in said brake line which relay valve has a air inlet port, an air outlet port and a control port, said relay valve being between said coupling and said reservoir, a control valve operated by said lower part as the lower part lifts, said control valve being between said emergency brake line and a first of said quick release valves and serving to divert air from said motor to said control port of said relay valve when operated by the lifting lower part whereby said relay valve is opened so that air can flow to said reservoir, a further relay valve having an air inlet port, an air outlet port and a control port, said control port being connected to said emergency brake line so that pressure in the brake line closes said further relay valve, said outlet port of the further relay valve being connected to the second of said dump valves and its inlet port to said reservoir whereby, upon pressure in said brake line dropping when said brake line is disconnected from the tractor, air in the reservoir flows to said air motor.

In a semi-automatic form, said further relay valve is replaced by a manually operable valve connected between said reservoir and the second of said quick release valves whereby, upon operation of said manually operable valve, air from said reservoir is fed to said air motor to lower said leg.

### BRIEF DESCRIPTION OF THE DRAWINGS

For a better understanding of the present invention, and to show how the same may be carried into effect, reference will now be made, by way of example, to the accompanying drawings in which:
Figure 1 is a pictorial view of a landing leg in accordance with the present invention;
Figure 2 is a top plan view of the landing leg of Figure 1 with a cover of a casing removed,
Figure 3 is a side elevation of the upper part of the leg of Figures 1 and 2,
Figure 4 is a side elevation of the inside of the casing;
Figure 5 is a front elevation of a bracket;
Figure 6 is an underneath plan view of the bracket of Figure 5, Figure 6 being to a larger scale;
Figure 7 is a diagram showing the pneumatic circuitry; of the landing leg of Figures 1 to 6; and
Figure 8 is a diagram showing a further pneumatic circuit.

### DETAILED DESCRIPTION OF THE DRAWINGS

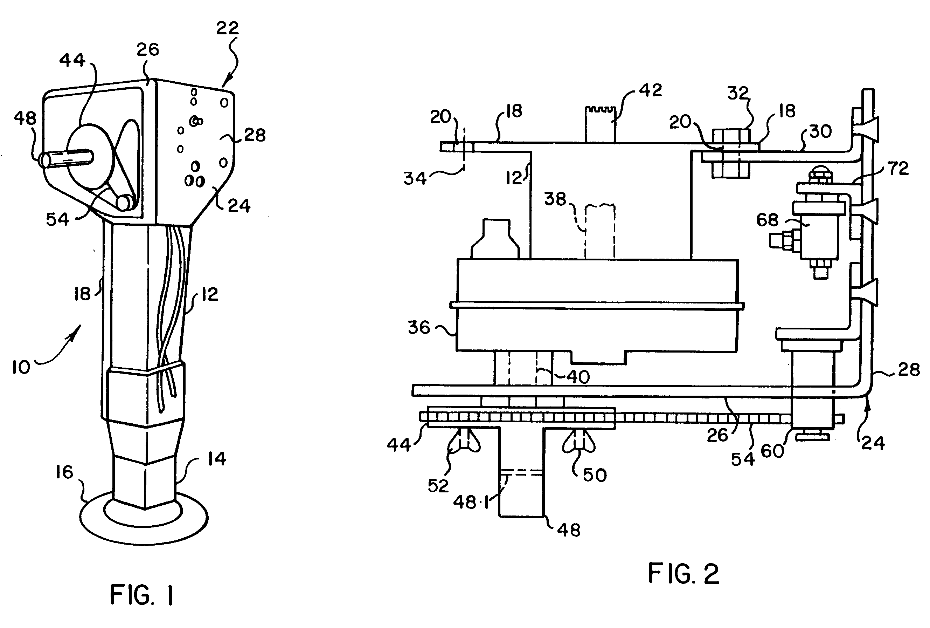

Referring firstly to Figure 1, the landing leg shown is generally designated 10 and comprises an upper part 12 and a lower part 14. The upper part 12 is constituted by a vertically elongate tube of hollow square section. The part 14 is constituted by a square section bar which fits snugly inside the tube constituting the upper part. At the lower end of the lower bar 14 there is a foot 16 which is the component which engages the surface on which the trailer is standing.

Protruding from two corners of the upper part 12 are flanges 18 only one of which is visible in Figure 1. The flange 18 has (see Figure 2), near the upper end thereof, a series of bolt holes 20. Bolts passed through these holes secure the landing leg 10 to the chassis of the trailer.

A housing generally designated 22 is secured to the upper part 12. More specifically, the housing comprises a plate 24 (Figure 2) which is bent so as to provide a front element 26 and a side element 28. A bracket 30 has one limb thereof secured to the side element 28 and the other limb thereof secured by bolts 32 to the adjacent flange 18 of the upper part 12. Two of the holes 20 receive the bolts 32. The centre line of one of the bolts which pass through the bolt holes 20 and secure the leg to the chassis is shown at 34 but the chassis itself has not been illustrated.

A split housing 36 has gearing therein The output shaft of the gearing within the housing 36 is shown at 38 and the input shaft of the gearbox is shown at 40.

The transmission within the upper part 12 which displace the lower part 14 up and down is not shown in detail and can take any one of a number of conventional forms. For example, there can be a rack fixed to the lower part 14 and a pinion driven by the shaft 38. Alternatively, there can be a crown wheel at the upper end of a vertical shaft and a pinion driven by the shaft 38 for driving the crown wheel. Rotation of the vertical shaft results in a nut, which is fixed to the lower part and is non-rotatable, moving up and down carrying the lower part with it depending on the direction of rotation.

A square section shaft 42 protrudes from the upper part 12 and is connected by a transverse shaft to the landing leg on the other side of the trailer. The shaft 42 is rotated by the shaft 38. Thus the legs are retracted and extended simultaneously.

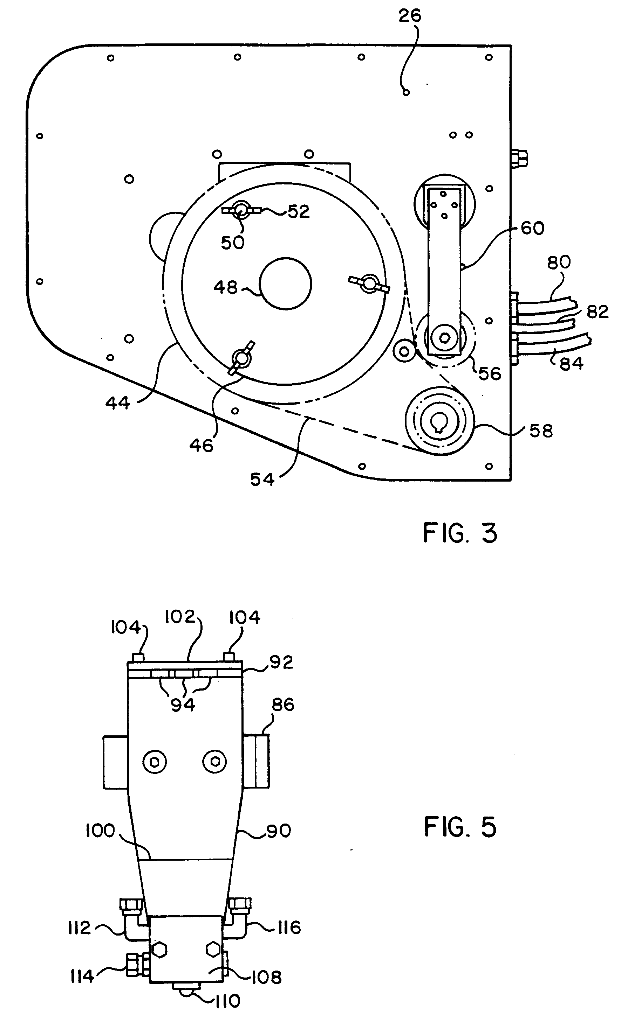

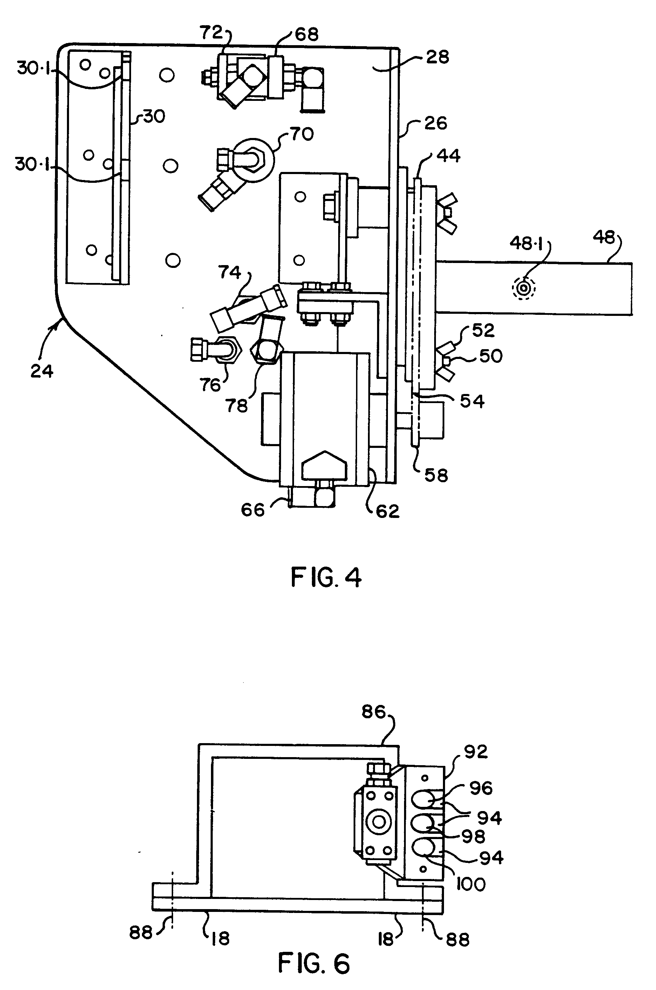

Turning now to Figure 3, reference numeral 44 designates a chain wheel which is co-axial with the input shaft 40 and which has secured thereto a disc 46 (see also Figure 1) from which a sleeve 48 protrudes. The input shaft 40 extends to within the sleeve 48. A hole 48.1 (Figure 4) in the sleeve 48 and a corresponding hole in the shaft 40 enables a cross pin to be inserted so that the sleeve and shaft are fast in rotation with one another.

Three studs 50 secured to the chain wheel 44 protrude through three holes provided therefor in the disc 46. Three wingnuts 52 secure the disc 46 to the chain wheel 44.

A chain 54 is entrained around the chain wheel 44 and around two further chain wheels designated 56 and 58. The wheel 56 is carried by a chain tensioner 60 and the wheel 58 is driven by an air motor as will be described in more detail hereinafter.

By applying a handle to the shaft 40, the legs can be raised and lowered manually.

Turning now to Figure 4, this illustrates the inner face of the element 28. The upper part 12 of the leg 10 and the gearbox housing 36 have been omitted to show the remaining parts. The bracket 30 which mounts the plate 24 on the flange 18 is shown in Figure 4 and has two bolt holes 30.1 which receive the bolts 32.

Reference numeral 62 designates a reversible air motor which drives the chain wheel 58. The air motor 62 is suspended from the underside of a bracket 64 which is itself mounted on the element 26.

The air inlet and air outlet from the motor 62 are shown at 66.

Reference numerals 68 and 70 indicate two quick release valves (also referred to as "dump valves") which ensure that air is exhausted from the system rapidly when this is desired. The valve 68 is mounted on a bracket 72 which is itself secured to the element 28 and the valve 70 is mounted directly onto the element 28. Consequently, in Figure 4, the valve 68 is shown from the side and the valve 70 is shown from the end.

The valves 68 and 70 are such that when air under pressure is applied to a first port, the valve adopts a condition in which the air flows out through a second port. However, when pressure is applied to the second port, the valve switches and air flows not to the first part but to atmosphere.

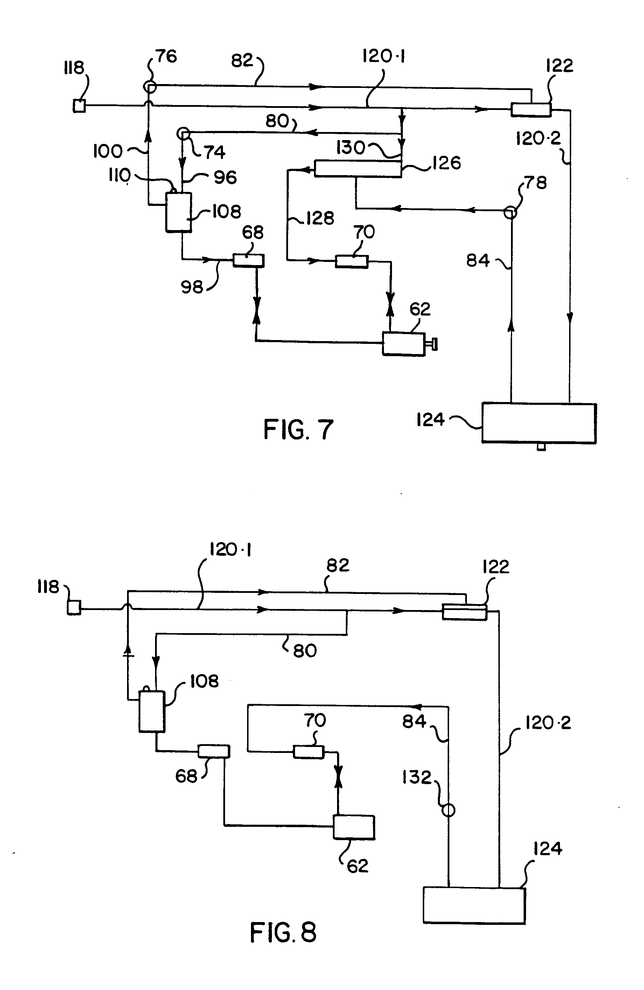

Three pneumatic connections are shown at 74, 76 and 78. These connections lead to three hoses 80, 82 and 84 (Figure 3) which extend away from the leg. The way in which these hoses are connected into the system, and the remaining pneumatic connections, will be described in more detail hereinafter with reference to Figure 7.

Referring now to Figures 5 and 6, reference numeral 86 designates a bracket which is bolted to the lower end of the upper part 12. The centre lines of the bolts which connect the bracket 86 to the flanges 18 are shown at 88. The bracket is not shown in Figure 1.

Secured to the bracket 88 is a plate 90 which has the upper end bent over at right angles to the remainder of the plate to form platform 92. The platform 92 has three notches 94 cut in one of the edges thereof and three hoses 96, 98 and 100 pass through these notches.

A notched plate 102 is secured by studs 104 to the top face of the platform 92 thereby to trap the hoses 96, 98 and 100 in the apertures which are defined partly by the notches 94 and partly by the notches in the plate 102.

The plate 90 is cranked along the line designated 100 so that the lower portion of the plate lies adjacent the lower part 14. A valve 108 is mounted on the lower part of the plate 90 and includes an operating member 110. The valve has three hose connectors 112, 114 and 116, the hoses 96, 98 and 100 respectively connecting to these three connectors. The hoses 96, 98 and 100 are not shown in Figure 4.

The other end of the hose 96 is connected to one of the dump valves, the other end of the hose 98 is connected to the inlet 74 and the other end of the hose 100 is connected to the inlet 76. These connections will be described in more detail hereinafter with reference to Figure 7.

The hoses that are within the casing 22 have not been shown in Figures 2, 3 and 4.

Turning now to Figure 7, the pneumatic circuit shown in this Figure is on the trailer and there is a quick release gland 118 which connects the pneumatic circuit to the tractor.

An airline 120.1, 120.2 leads from the gland 118 to a relay valve 122 and from the relay valve 122 to a reservoir tank 124. When the tank is full the emergency brake is held in the "off" position. As the tank 124 empties, the emergency brake moves to the "on" position.

The hose 80 is connected via a T-piece 124 to the line 120.1, The hose 80 leads to the connection 74 and thence by way of the hose 96 to the valve 108. The hose 98 is connected through the valve 68 to the motor 62. From the motor 62 air flows to the valve 70. The valves are connected so that air flows through the valve 68 to the motor but is exhausted through the valve 70.

Thus the effect of applying air to the gland 118 is to rotate the motor 62 in the direction which raises the lower parts of the legs. When the valve 108 is operated by the foot 16, air is diverted from the hose 98 to the hose 100 thence to the connector 76 and to the hose 82 which leads to the control part of the relay valve 122. The valve 122 opens and air thus flows along the airline 120.1, 120.2 to the reservoir tank 124. The tank thus fills and the emergency brake is released.

A further relay valve 126 (Figure 7) is provided within the casing 22 but has not been illustrated in Figures 1 to 6. It has three ports. One of them is connected via the connector 78 to the hose 84 and thence to the reservoir tank 124. Further hoses 128 and 130 connect the valve 126 to the valve 70 and to the airline 120.1.

At the time that the reservoir 124 is filling, pressure is applied to the control port of the valve 126 via the hose 130 and the valve 126 is thus held closed. Consequently air cannot flow from the hose 84 to the hose 128 and thus to the valve 70.

When the gland 118 is disconnected, the pressure in the line 120.1 drops. The control signal at the valve 126 is thus removed and the valve moves to its other position placing the tank 124 in communication with the valve 70, motor 62 and valve 68. Air flows through the valve 70 and motor 62 and is dumped by the valve 68. The motor 62 rotates in the opposite direction raising the legs.

The pneumatic circuit of Figure 8 has a number of elements which are also found in the circuit of Figure 7, and in these cases like reference numerals have been used.

In this form, when the trailer-tractor hoses are connected, air flow through the hoses 80 and 96 to the valve 108, through the valve 108 to the quick release valve 60, through the motor 62 and out to atmosphere via the valve 70. The lower part of the leg lifts until the foot 16 actuates the valve 108. As the valve 108 is actuated, air is diverted from the hose 98 to the hoses 100 and 82 and operates the relay valve 122. The relay valve 122 opens and air flows along the line 120.1, 120.2 and thence to the brake operating reservoir 124. A push button operated valve 132 is provided in the hose 84 and this is closed at the time that the reservoir is filling. Hence air cannot flow out of the reservoir 124 which is thus pressurized. The leg is thus raised and the emergency brake released in sequence.

To lower the legs, the air-connection between the trailer and the tractor is broken at gland 118 so that the relay valve 122 closes and no further air is supplied to the reservoir 124. The push button operated valve 132 is opened and air consequently flows through the valve 70, through the motor 62 and thence to atmosphere via the dump valve 68.

The operation of this system is thus semi-automatic in that the legs are automatically raised when the trailer's air inlet 118 is connected to the tractor's air outlet, but must be lowered manually by opening the valve 132.

## Claims

1. A landing leg for a trailer, the leg including an upper part having means for mounting it on a trailer, a lower part which can move with respect to the upper part thereby to increase or decrease the length of the leg, an air motor, the air motor having first and second ports for connecting the air motor into an air line so that air flowing through said airline in either direction flows through said motor, air quick-release valves connected into said airline one on each side of the air motor, each of said valves having first and second inlet/outlet ports and a dump port through which air flows to atmosphere, and the valves each being connected to permit flow therethrough to the air motor whilst dumping to atmosphere air which flows thereto from the motor, and drive transmission means for transmitting drive from said motor to said lower part thereby to displace said lower part up or down with respect to said upper part and decrease or increase the length of the leg.

2. A landing leg according to claim 1, and including a valve having an operating element positioned to be engaged by said lower part as it lifts, said valve, when operated by the raised lower part, diverting air away from said air motor so that lifting of said lower part is terminated.

3. A landing leg according to claim 1, in which said transmission means is a step down transmission whereby rotation of an output shaft of the air motor results in slower rotation of an output shaft of said means.

4. A landing leg according to claim 3, wherein said transmission means includes a smaller chain wheel driven by said output shaft of the air motor and a larger chain wheel driven by a chain entrained around said wheels, and further includes a gear train driven by said larger chain wheel.

5. A trailer including an emergency brake line connect to an emergency brake operating air reservoir which fills when the trailer is coupled to a tractor and empties when the trailer is uncoupled from the tractor, a hose coupling for connecting said emergency brake line to the air system of a tractor, and an air leg as defined in claim 1 having said upper part thereof mounted on said trailer, said air line being connected at one end thereof to said emergency brake line and at the other end thereof to said reservoir to receive air therefrom.

6. A trailer which has a landing leg, the leg having an upper part mounted on the trailer, a lower part which can move with respect to the upper part thereby to increase or decrease the length of the leg, an air motor, the air motor having first and second ports for connecting the air motor into an air line so that air flowing through said airline in either direction flows through said motor, air quick-release valves connected into said airline one on each side of the air motor, each of said valves having first and second inlet/outlet ports and a dump port through which air flows to atmosphere, the valves each being connected to permit flow therethrough to the air motor whilst dumping to atmosphere air which flows thereto from the motor, drive transmission means for transmitting drive from said motor to said lower part thereby to displace said lower part up or down with respect to said upper part and decrease or increase the length of the leg, an emergency brake line leading to an emergency brake operating air reservoir, a hose coupling for connecting the emergency brake line to the air system of a tractor, a relay valve in said brake line which relay valve has a air inlet port, an air outlet port and a control port, said relay valve being between said coupling and said reservoir, a control valve operated by said lower part as the lower part lifts, said control valve being between said emergency brake line and a first of said quick release valves and serving to divert air from said motor to said control port of said relay valve when operated by the lifting lower part whereby said relay valve is opened so that air can flow to said reservoir, a further relay valve having an air inlet port, an air outlet port and a control port, said control port being connected to said emergency brake line so that pressure in the brake line closes said further relay valve, said outlet port of the further relay valve being connected to the second of said dump valves and its inlet port to said reservoir whereby, upon pressure in said brake line dropping when said brake line is disconnected from the tractor, air in the reservoir flows to said air motor.

7. A trailer as claimed in claim 6, with the modification that said further relay valve is replaced by a manually operable valve connected between said reservoir and the second of said quick release valves whereby, upon operation of said manually operable valve, air from said reservoir is fed to said air motor to lower said leg.
